# DEMANDE DE BREVET EUROPEEN

(11) **EP 0 564 382 A1**
(43) Date de publication de la demande: **06.10.1993**
(21) Numéro de dépôt: 93420141.9
(22) Date de dépôt: 29.03.1993
(51) Int. Cl.: B29C 51/46, B29C 51/42

(54) **Procédé et dispositif de thermoformage de matériau thermoplastique en bande**

(30) Priorité: 30.03.1992 FR 9204260
(71) Demandeur: PECHINEY EMBALLAGE ALIMENTAIRE, F-92115 Clichy (FR)
(72) Inventeur: Ferrat, Jean-Marie, F-92350 Le Plessis Robinson (FR); Philippe, Michel, F-38200 Vienne (FR)
(74) Mandataire: Séraphin, Léon

(57) **Abrégé**

Procédé de thermoformage d'une bande thermoplastique (1) préchauffée comprenant des moyens pour positionner ladite bande entre la matrice (2) et le poinçon (5) d'un outil de conformation, des moyens pour actionner le poinçon et former un objet, des moyens (8) pour refroidir ledit objet et pour l'éjecter, caractérisé en ce que, de manière à augmenter la cadence de production, ledit poinçon est actionné à l'aide d'un vérin à déplacement contrôlé selon une fonction du temps prédéterminée.

Dispositif correspondant pour mettre en oeuvre le procédé.

## Description

### DOMAINE DE L'INVENTION

L'invention concerne le domaine de la transformation des matières plastiques, et plus particulièrement le domaine de la mise en forme de matériaux thermoplastiques en bande par thermoformage.

### ART ANTERIEUR

Le transformation par thermoformage d'une bande (ou d'une feuille) de matière thermoplastique en objet tridimensionnel fait appel à une presse de thermoformage doté d'un outil de thermoformage et comprend, de manière générique, les étapes suivantes :
- positionnement et chauffage de la bande de matériau thermoplastique à la température de transformation,
- déformation de la bande en objet tridimentionnel grâce à diverses combinaisons de moyens,
- refroidissement de l'objet formé et démoulage, avec découpage éventuel des bords.

Il existe un certains nombre de combinaisons de moyens connus pour transformer en objet tridimentionnel la bande thermoplastique chauffée :
- ainsi, on peut appliquer la bande thermoplastique contre la paroi intérieure d'un moule, à l'aide d'un poinçon, à l'aide d'air comprimé ou de vide, ou à l'aide d'une combinaison de ces deux moyens,
- on peut aussi appliquer la bande thermoplastique contre la paroi externe d'un "poinçon" à l'aide de moyens mécaniques, à l'aide d'air comprimé ou de vide, ou à l'aide d'une combinaison de ces deux moyens.

### PROBLEME POSE

La demanderesse a pratiqué à l'échelle industrielle le thermoformage de bande thermoplastique de polypropylène (PP) pour fabriquer des emballages.

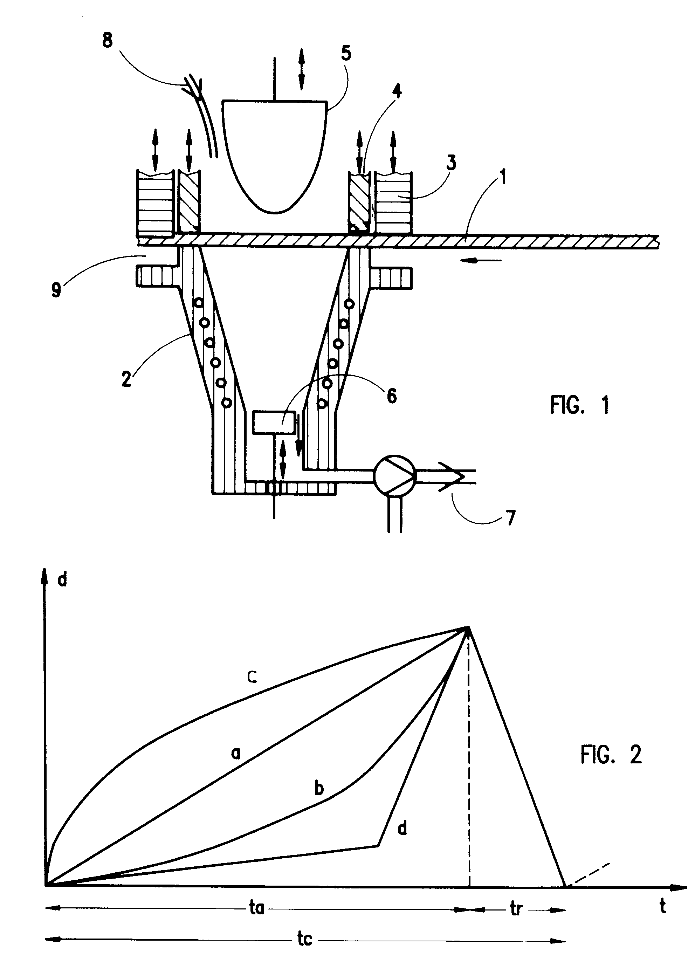

La figure 1 représente schématiquement l'outil de thermoformage utilisé par la demanderesse pour fabriquer industriellement des emballages en matière thermoplastique et plus particulièrement des pots tronconiques en PP.

Cette figure permet de décrire la succession d'opérations réalisées typiquement pour fabriquer un pot en PP :
a) amenage de la bande PP (1) préalablement chauffée et blocage de la bande sur la paroi supérieure du moule (2) grâce à un serre-flan (4) annulaire qui vient en butée contre le moule (2) et grâce à l'outil de découpe (3) qui appuie sur la bande (1).
b) formation du pot par poinçonnage à l'aide du poinçon (5) mu pneumatiquement qui réalise un mouvement de va et vient, et mise sous vide du moule grâce à la prise de vide (7).
   A la fin de cette étape, le poinçon a repris sa position initiale et la prise de vide (7) a été inversée (remise à pression atmosphérique).
c) refroidissement par soufflage d'air, schématisé par l'arrivée d'air (8) sur la figure 1, ce refroidissement par soufflage complétant celui réalisé par la paroi réfrigérée du moule (2).
d) découpe du bord du pot par abaissement de l'outil de découpe (3) et poursuite du refroidissement du pot.
e) éjection du pot, grâce à l'éjecteur (6).

Le problème que la demanderesse a cherché à résoudre est double :
- d'une part, augmenter la cadence de production, qui se situe à environ 25 pots/min, soit une durée de production de 2,4 s par pot, avec le procédé de l'art antérieur.
- d'autre part, assurer une production de qualité constante.

### DESCRIPTION DE L'INVENTION

Selon l'invention, le procédé de thermoformage d'une bande thermoplastique préchauffée en objet tridimentionnel comprend des moyens pour positionner ladite bande préchauffé entre la matrice et le poinçon d'un outil de conformation et l'immobiliser dans cette position, des moyens pour actionner le poinçon et former ledit objet par placage de ladite bande contre la paroi intérieure de ladite matrice, des moyens pour refroidir ledit objet et pour l'éjecter dudit outil de conformation, et est caractérisé en ce que, de manière à augmenter la cadence de production, ledit poinçon est actionné à l'aide d'un vérin à déplacement contrôlé selon une fonction du temps prédéterminée.

Il est bien connu, en particulier dans les techniques de mise en forme de feuilles métalliques par emboutissage d'utiliser des poinçons et des matrices, les poinçons étant soumis à un déplacement mécaniquement contrôlé par l'emploi de coulisseaux et de villebrequins.
Ce type de technique est d'une part très lourd et volumineux et ne pourrait que très difficilement être transposé aux machines modernes de thermoformage qui produisent un grand nombre d'objets simultanément, par exemple 32 (4 rangées de 8 objets), et d'autre part, la course d'un poinçon est géométriquement liée aux dimensions du villebrequin, et manque donc de flexibilité.

La technique utilisée habituellement dans l'art antérieur pour le thermoformage des bandes en matière plastique met en oeuvre de l'air comprimé, ce qui présente deux inconvénients :
- elle est lente, notamment parce que la pression de l'air comprimé industriel est limitée à 10 bars sous peine de faire appel à des équipements spéciaux de volume incompatible avec les dimensions des machines à thermoformer.
- le mouvement du poinçon est plus impulsé que contrôlé. En effet, le poinçon mu par air comprimé est soumis à des impulsions qui ne permettent aucun contrôle de la cinématique du poinçon.

L'analyse des durées de chaque opération unitaire a montré que la cadence de production était limitée notamment par la durée de la mise en forme du pot, de l'ordre de 0,7 s et par la durée de refroidissement, de l'ordre de 1 s.

Grâce à la maîtrise et au contrôle de la cinématique (déplacement au cours du temps) du poinçon, la demanderesse a pu améliorer à la fois la cadence de production et la qualité des objets produits, en particulier la constance de la qualité.

Fondamentalement, l'actionnement du poinçon à l'aide d'un vérin à déplacement contrôlé selon une fonction du temps prédéterminée permet d'une part de découpler le mouvement aller et retour du poinçon et en particulier de fortement diminuer la durée du mouvement retour, qui peut être très inférieure à la durée du mouvement aller, inférieure par exemple d'au moins 50 %, et permet d'autre part de choisir la cinématique du mouvement aller la plus adaptée à la déformation d'un matériau thermoplastique ramolli relativement fragile et dont les propriétés mécaniques varient au cours de la mise en forme (effet d'amincissement et d'orientation de la bande durant la formation de l'objet).

La demanderesse a trouvé que l'emploi d'un vérin hydraulique à cinématique contrôlée permettait justement d'adapter la vitesse instantanée du poinçon en fonction de la résistance mécanique instantanée de la bande au cours de sa mise en forme, de manière à obtenir la cadence de production la plus élevée possible tout en assurant une production de qualité.

On utilise, comme vérin hydraulique à cinématique (ou déplacement) contrôlé, en particulier, un vérin hydraulique dont le déplacement est lié à des ouvertures / fermetures de vannes commandées par un jeu d'instructions enregistrées au préalable typiquement dans un automate programmable ou une mémoire d'ordinateur, de manière à réaliser en un temps très court, typiquement en moins d'un dixième de seconde, des mouvements précis du poinçon obéissant à une relation donnée du déplacement en fonction du temps (d = f(t)).

La figure 2 illustre les fonctions d = f(t) les plus représentatives de l'invention.
Sur cette figure, le temps est porté en abscisse, la partie "ta" étant la durée de l'aller, la partie "tr" étant la durée du retour, et "tc" désignant la durée d'un cycle complet.
En ordonnée, figurent plusieurs possibilités de déplacement :
- mouvement linéaire à l'aller : a
- mouvement accéléré à l'aller : b
- mouvement décéléré à l'aller : c
- combinaison de mouvement linéaires : d

Le choix de la cinématique la mieux adaptée dépend notamment de la nature de la matière thermoplastique, de la géométrie de l'objet à obtenir.

La technique développée par la demanderesse permet de passer d'une durée de poinçonnage de 0,7 s à une durée de poinçonnage comprise entre 0,15 et 0,35 s et typiquement de 0,25 s, la phase de poinçonnage correspondant à la mise en forme proprement dite de l'objet durant le mouvement aller-retour du poinçon.

Mais le gain de temps permis par l'invention ne se limite pas à une diminution de la durée du poinçonnage. En effet, la maîtrise du poinçonnage et sa rapidité permet d'utiliser une bande thermoplastique initialement moins chaude et donc moins longue à refroidir.

Comme cela est connu, le thermoformage du PP nécessite une bande de PP dans une plage de température relativement étroite : environ de 160 à 165°C dans le cas du PP utilisé dans la présente demande, la bande étant trop rigide au-dessous de 160°C et trop molle au-dessus de 165°C.

La vitesse de refroidissement d'une bande de PP, aux environs de sa température de ramollissement (température de travail du PP par thermoformage) est connue : pour une épaisseur de bande de 0,1 mm, la température baisse de 1°C en 0,1 s , étant donné le rayonnement de la paroi du moule à 20°C.

Compte tenu de cette grande vitesse de refroidissement, il est possible selon l'art antérieur d'utiliser deux "stratégies" de production :
La première consiste à surchauffer la bande et à thermoformer à faible cadence une bande légèrement plus molle que ce qui serait souhaité, elle a l'avantage de fiabiliser la qualité et l'inconvénient majeur d'une faible productivité.
La seconde consiste à moins surchauffer la bande et à opérer le thermoformage à cadence plus élevée, mais avec une notable variation de qualité.

Quelle que soit la manière de procéder, on n'obtient pas, avec les procédés de l'art antérieur, simultanément une cadence élevée et une production de qualité constante.

Selon une hypothèse émise par la demanderesse à la suite de ses recherches, cela pourrait être dû en grande partie au fait que la vitesse de refroidissement de la plaque de PP, dans le domaine étroit de température où le PP est thermoformable à grande cadence, serait encore trop grande par rapport à la vitesse du thermoformage proprement dit, de sorte que la non maîtrise de deux phénomènes se déroulant en parallèle (le refroidissement de la bande PP d'une part, la séquence de thermoformage d'autre part), entraînerait une variation non maîtrisable de qualité finale.

L'analyse de la demanderesse l'a donc conduite à vérifier cette hypothèse et à rechercher d'une part au moins la maîtrise rigoureuse de la séquence de thermoformage et donc de sa cinématique, et d'autre part, de préférence, l'adaptation de la cinématique du poinçon à la température de la bande de PP.

En définitive, la demanderesse en est arrivé à la conclusion que la solution aux problèmes posés, c'est à dire l'obtention d'objets de qualité constante à grande cadence, passait d'abord par la maîtrise de la cinématique du poinçon et ensuite par l'asservissement de la cinématique du poinçon à la température de la bande de PP préchauffée, c'est à dire le choix de la cinématique de poinçonnage la plus adaptée à la température réelle de la bande de PP.

Enfin, poursuivant sa recherche d'une cadence de production élevée, elle a trouvé qu'il était avantageux et techniquement possible de profiter des moyens, déjà utilisés pour maîtriser la cinématique du poinçon et son asservissement à la température de la bande de PP, pour améliorer encore la productivité en accélérant le refroidissement de l'objet formé en PP, typiquement de 162°C vers 135°C, température à laquelle il peut être éjecté du moule sans déformation ni risque d'endommagement.

Pour cela, on remplace le moyen de soufflage (8) de l'art antérieur par un moyen d'injection d'une matière porteuse d'un grand nombre de frigories par unité de volume, typiquement un gaz liquéfié (CO2 liquide, air liquide, azote liquide...) ou un solide finement pulvérisé (neige carbonique), ou encore un gaz refroidi à très basse température (air refroidi par passage dans de l'air liquide), le moyen d'injection étant déclenché dès le retour du poinçon et typiquement pendant 0,1 s, ce qui permet d'augmenter encore la productivité.

Dans la version du procédé et du dispositif le plus performant selon l'invention, l'ensemble du procédé et du dispositif est automatisé et commandé par un ordinateur ou automate programmable, qu'il s'agisse de déplacer les parties mobiles de l'outil, le poinçon, la bande de PP ou l'éjecteur, de déclencher la mise sous vide ou l'injection de frigories, de réguler la température de la bande PP, etc...

La version la plus performante du procédé permet au moins de doubler la productivité de l'art antérieur, tout en assurant un niveau de qualité stable et élevé.

L'invention s'applique à la mise en forme par thermoformage de l'ensemble des matériaux thermoplastiques utilisés en bande ou en feuille, principalement les matériaux thermoplastiques utilisables pour fabriquer à grande cadence des objets de grande consommation, typiquement des emballages, qu'il s'agisse de matériaux thermoplastiques en bande ou feuille homogènes dans la direction de leur épaisseur ou de matériaux multicouches comprenant au moins deux couches de matériau thermoplastique de nature chimique ou physico-chimique différente.

### EXEMPLES DE REALISATION

Pour l'ensemble des exemples, on a utilisé une bande de PP homopolymère de départ de 21 mm d'épaisseur et on a formé des pots en PP tronconiques ayant une diamètre supérieur de 67 mm, un diamètre inférieur de 50 mm et une hauteur de 113 mm.

### EXEMPLE 1

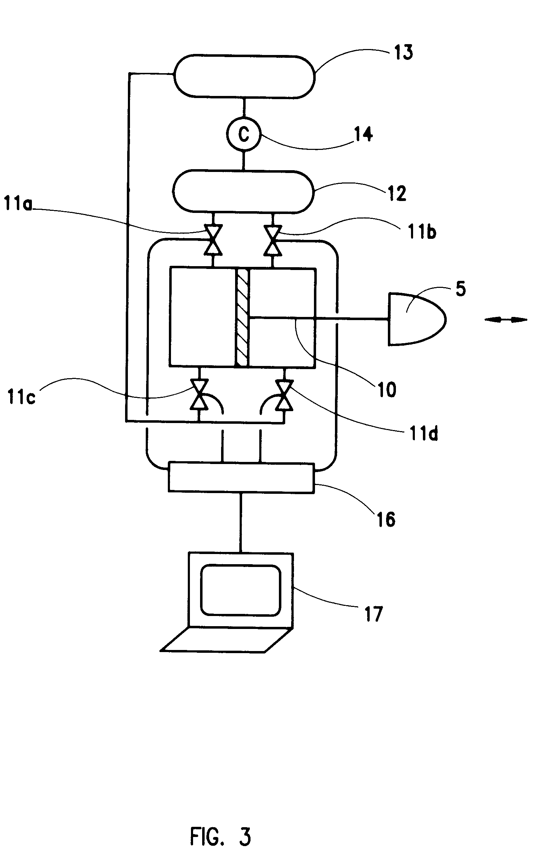

On a réalisé, à l'aide d'éléments du commerce, un dispositif tel que représenté schématiquement à la figure 3, comprenant un poinçon solidaire d'un vérin hydraulique muni d'électrovannes commandées selon une séquence prédéterminée, de manière à obtenir la maîtrise de la cinématique du poinçon. Sur machine à thermoformer du commerce, on a remplacé le vérin pneumatique par ce dispositif.

Dans cette réalisation, le poinçon (5) est solidaire d'un vérin hydraulique (10) dont le déplacement est commandé par l'arrivée / le départ de fluide hydraulique dans chacune des deux chambres du vérin, grâce à l'ouverture/ la fermeture totale ou partielle d'électrovannes (11a à 11d), dont deux (11a et 11b) contrôlent l'arrivée de fluide hydraulique "haute pression" depuis un stockage de fluide hydraulique "haute pression" (12), et deux autres (11c et 11d) contrôlent le départ de fluide hydraulique "basse pression" vers un stockage de fluide "basse pression" (13), un compresseur (14) assurant la circulation du fluide hydraulique du stockage "basse pression" (13) vers le stockage "haute pression" (12) de manière à maintenir constante la pression du fluide hydraulique "haute pression".

Les électrovannes (11a à 11d) sont commandées par l'intermédiaire d'un module de conversion (16) permettant d'établir la correspondance exacte entre la position et le déplacement du poinçon et les ouvertures / fermetures des électrovannes, de sorte que le module de conversion (16) reçoit un signal de commande, c'est à dire un ordre de positionnement du poinçon, et le convertit grâce aux électrovannes (11a à 11d) en déplacement du poinçon.

Le signal de commande, qui impose en temps réel au poinçon la cinématique souhaitée pour la poinçon, est émis par tout moyen de commande adapté (17), ayant typiquement la possibilité de mémoriser une séquence donné de consignes, typiquement la relation "déplacement du poinçon = f (temps)", éventuellement de choisir une séquence parmi un groupe de séquences ou d'adapter une séquence en fonction d'un critère donné, et d'envoyer ces consignes sous forme de signal adapté (digital ou analogique) à un module de conversion (16) qui transforme le signal reçu en commande exécutable par la machine, que celle-ci soit le vérin hydraulique ou tout autre élément du dispositif soumis à un mouvement séquentiel.
Comme moyen de commande (17), on peut citer les automates programmables et les ordinateurs munis des cartes et des sorties adaptées.

En mettant en oeuvre ces moyens, la demanderesse a pu réduire, au moins de moitié, la durée du poinçonnage lui-même qui passe de 0,7 s à 0,2 - 0,3 s. Sur l'ensemble du cycle de thermoformage, le gain de productivité est de l'ordre de 15%-20% et on observe également une plus grande stabilité de la qualité.

### EXEMPLE 2

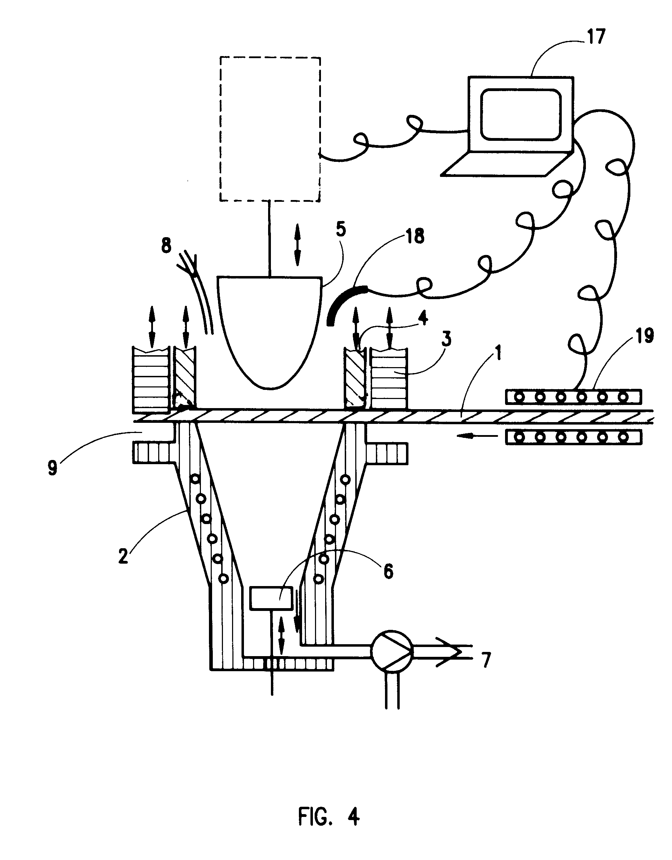

Dans cet exemple (voir figure 4), on a repris les éléments de procédé et de dispositif de l'exemple 1 et on les a complétés en asservissant la cinématique du poinçonnnage à la température réelle de la bande de PP au début de la séquence de poinçonnage. Pour cela, des capteurs (18) mesurent la température en différents point de la bande préchauffé, de préférence lorsqu'elle est positionnée face au poinçon, et envoient l'information au moyen de commande (17) qui est programmé en conséquence pour adapter la cinématique de chaque coup de poinçon à la température réelle de la bande de PP, et pour réguler la température de la bande PP préchauffée en amont grâce à un moyen de chauffage (19).

Plusieurs cas extrèmes peuvent se présenter, en cas notamment de dysfonctionnements du préchauffage de la bande PP en amont du thermoformage proprement dit :
- si la température est dans le domaine optimum de 162°C +/- 2°C, la séquence standard de poinçonnage s'applique.
- si la température est légèrement supérieure à 164°C, soit une séquence spéciale de poinçonnage s'applique, soit décalage de la séquence standard du temps nécessaire au refroidissement de la bande.
- si la température est légèrement inférieure à 160°C, une autre séquence spéciale de poinçonnage s'applique. Des essais permettent de définir, pour un matériau de départ et un objet à fabriquer donnés, quelles sont les limites supérieures et inférieures extrèmes où le poinçonnage ne doit en aucune manière être réalisé sous peine de fabriquer un produit hors du standard de qualité.

L'asservissement de la cinématique de poinçonnage à la température réelle de la bande de PP permet de thermoformer "en sécurité" à une température plus basse de quelques degrés, ce qui entraîne une diminution du temps de refroidissement et, cumulé avec la diminution de la durée du poinçonnage de 0,4 à 0,5 s, ramène la durée totale de fabrication d'un objet à environ 1,7 s. On opbtient ainsi un gain de productivité d'environ 40 % par rapport à l'art antérieur tout en améliorant la constance de qualité.

### EXEMPLE 3

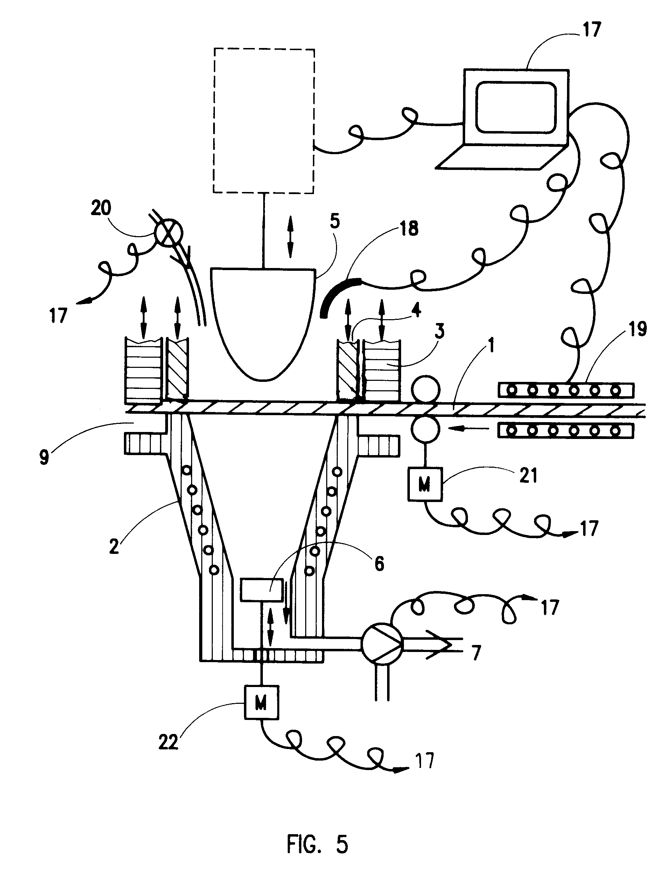

Dans cet exemple (voir figure 5 ), on a complété les éléments 35 de procédé et de dispositif de l'exemple 2 en incorporant un injecteur de frigories (20) piloté par le moyen de commande (17), ainsi que des moyens pour commander l'éjecteur et l'avancement de la bande PP grâce au moyen de commande (17), ainsi que l'ensemble des éléments mobiles (serre-flan, moule...) dont le déplacement séquentiel peut avoir une influence sur la cadence globale du procédé. Pour ne pas surcharger 5, on n'a pas représenté sur cette figure l'ensemble des éléments mobiles et leurs liaisons avec le moyen de commande (17).

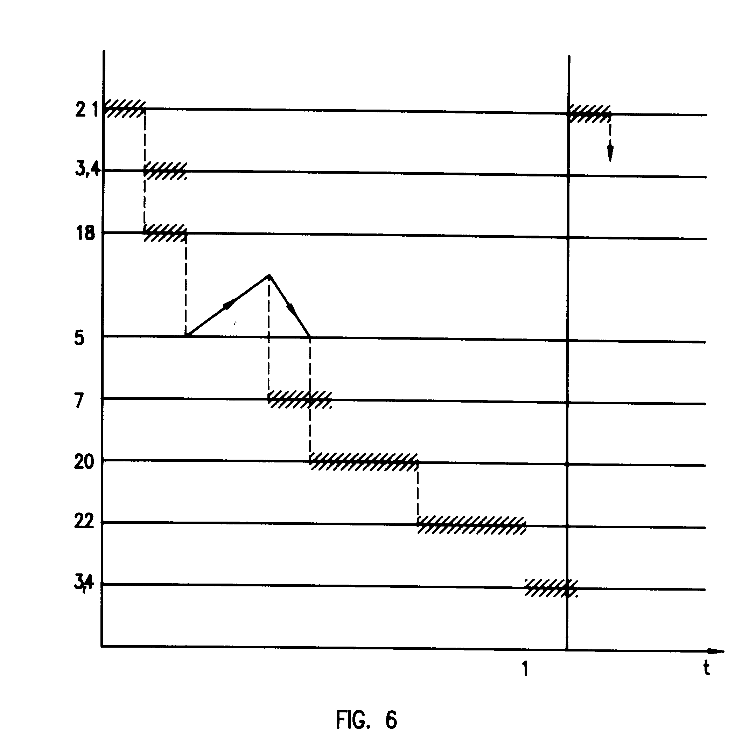

La figure 6 représente le déroulement d'un cycle complet de thermoformage réalisé selon l'exemple 3 (en abscisse le temps en secondes, on ordonnée, la référence de l'élément actif de la figure 5). Il est réalisé en 1,1 s à comparer aux 2,4 s de l'art antérieur.

### AVANTAGES DE L'INVENTION

Les recherches de la demanderesse ont permis d'identifier l'origine des problèmes rencontrés dans les procédés et dispositifs de l'art antérieur et des limites de ces procédés tant en productivité qu'en constance de qualité.

Les solutions trouvées par la demanderesse ont conduit à une transformation radicale du procédé et du dispositif de thermoformage, avec comme conséquences, une très forte progression de la productivité, qui peut être typiquement doublée, et une grande amélioration de la qualité puisque, mis à part la qualité de la bande de PP elle-même, tout le procédé de thermoformage a été mis sous contrôle.

## Revendications

**1 -** Procédé de thermoformage d'une bande thermoplastique préchauffée en objet tridimentionnel comprenant des moyens pour positionner ladite bande préchauffé entre la matrice et le poinçon d'un outil de conformation et l'immobiliser dans cette position, des moyens pour actionner le poinçon et former ledit objet par placage de ladite bande contre la paroi intérieure de ladite matrice, des moyens pour refroidir ledit objet et pour l'éjecter dudit outil de conformation, et caractérisé en ce que, de manière à augmenter la cadence de production, ledit poinçon est actionné à l'aide d'un vérin à déplacement contrôlé selon une fonction du temps prédéterminée.

**2 -** Procédé selon la revendication 1 dans lequel ledit vérin est un vérin hydraulique, de manière à permettre la maîtrise et le contrôle de la cinématique dudit poinçon.

**3 -** Procédé selon la revendication 2 dans lequel, de manière à diminuer le temps de fonctionnement dudit poinçon, le temps de retour du poinçon est inférieur au temps aller du poinçon durant lequel ladite bande est mise en forme.

**4 -** Procédé selon la revendication 3 dans lequel ledit vérin a une course qui obéit à une fonction du temps f(t) linéaire durant le temps du mouvement aller du poinçon.

**5 -** Procédé selon la revendication 3 dans lequel ledit vérin a une course qui obéit à une fonction du temps f(t) qui est accélérée durant le temps du mouvement aller du poinçon.

**6 -** Procédé selon la revendication 3 dans lequel ledit vérin a une course qui obéit à une fonction du temps f(t) qui est décélérée durant le temps du mouvement aller du poinçon.

**7 -** Procédé selon la revendication 3 dans lequel ledit vérin a une course qui obéit à une fonction du temps f(t) qui est une succession de fonctions linéaires du temps, durant le temps du mouvement aller du poinçon.

**8 -** Procédé selon une quelconque des revendications 1 à 7 dans lequel la durée de poinçonnage correspondant à un aller-retour du vérin / du poinçon est comprise entre 0,15 et 0,35 s.

**9 -** Procédé selon une quelconque des revendications 1 à 8 dans lequel la cinématique du poinçon est adaptée à la température de la bande de PP.

**10 -** Procédé selon une quelconque des revendications 1 à 9 dans lequel le refroidissement de l'objet thermoformé est accéléré par injection d'une matière porteuse d'un grand nombre de frigories par unité de volume, typiquement un gaz liquéfié (CO2 liquide, air liquide, azote liquide...) ou un solide finement pulvérisé (neige carbonique), ou encore un gaz refroidi à très basse température (air refroidi par passage dans de l'air liquide), le moyen d'injection étant déclenché dès le retour du poinçon et typiquement pendant 0,1 s.

**11 -** Procédé selon une quelconque des revendications 1 à 10 dans lequel l'ensemble du procédé est automatisé et commandé par un ordinateur ou un automate programmable, qu'il s'agisse de déplacer le poinçon, la bande de PP ou l'éjecteur, de déclencher la mise sous vide ou l'injection de frigories, de réguler la température de la bande PP.

**12 -** Procédé selon une quelconque des revendications 1 à 11 dans lequel on thermoforme un matériau thermoplastique en bande ou feuille adapté à la fabrication d'emballages choisi parmi un matériau homogène sur toute son épaisseur ou un matériau multicouches comprenant au moins deux couches de matériau thermoplastique de nature chimique ou physicochimique différente.

**13 -** Dispositif pour mettre en oeuvre le procédé selon une quelconque des revendications 1 à 12, comprenant un poinçon mû par un vérin hydraulique à déplacement contrôlé selon une fonction du temps prédéterminée.
